(19) Europäisches Patentamt
European Patent Office
Office européen des brevets

(11) **EP 4 081 924 B1**

(12) **EUROPEAN PATENT SPECIFICATION**

(45) Date of publication and mention
of the grant of the patent:
**18.10.2023 Bulletin 2023/42**

(21) Application number: **20833918.4**

(22) Date of filing: **23.12.2020**

(51) International Patent Classification (IPC):
***G06F 21/62*** *(2013.01)*

(52) Cooperative Patent Classification (CPC):
**G06F 21/6254**

(86) International application number:
**PCT/EP2020/087816**

(87) International publication number:
**WO 2021/130337 (01.07.2021 Gazette 2021/26)**

(54) **PRIVACY PRESERVATION IN A QUERYABLE DATABASE BUILT FROM UNSTRUCTURED TEXTS**

WAHRUNG DER PRIVATSPHÄRE IN EINER AUS UNSTRUKTURIERTEN TEXTEN AUFGEBAUTEN ABFRAGBAREN DATENBANK

PRÉSERVATION DE LA CONFIDENTIALITÉ DANS UNE BASE DE DONNÉES INTERROGEABLE CONSTRUITE À PARTIR DE TEXTES NON STRUCTURÉS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.12.2019 EP 19383189**

(43) Date of publication of application:
**02.11.2022 Bulletin 2022/44**

(73) Proprietor: **Medsavana S.L.**
**28004 Madrid (ES)**

(72) Inventors:
• **TELLO GUIJARRO, Jorge**
**28004 Madrid (ES)**

• **LUMBRERAS SANCHO, Sara**
**28015 Madrid (ES)**
• **FERNÁNDEZ GARCÍA, Javier**
**28004 Madrid (ES)**
• **MARCHESSEAU, Stephanie**
**28004 Madrid (ES)**

(74) Representative: **Hoffmann Eitle**
**Hoffmann Eitle S.L.U.**
**Paseo de la Castellana 140, 3a planta**
**Edificio LIMA**
**28046 Madrid (ES)**

(56) References cited:
**US-A1- 2014 278 366    US-A1- 2014 278 409
US-A1- 2018 107 648    US-A1- 2019 286 697**

## Description

### Technical field

The present disclosure relates to a computer-implemented method of generating a queryable database originated from unstructured texts wherein individual privacy is preserved. The present disclosure also relates to a computer program product for generating the database and a data processing apparatus for generating the database.

### Background

The analysis of data collected in a field is a useful tool for identifying trends and patterns which may be used to form a more accurate understanding of the field. Data may be collected and analysed, with the analysed data being stored on a queryable database. Aggregated information may be provided by the queryable database in order to provide a tool for statistical analysis of the data to identify the trends and patterns in the field.

For queryable databases based on data regarding individuals wherein automated queries are possible, an attacker may discover information about an individual through a combination of different aggregated queries. More specifically, an attacker making a combination of different queries on the database can deduce specific information about an individual, for example by adding and subtracting the results of the queries.

As such, queryable databases providing aggregated data may still be used by an attacker to identify information regarding an individual.

One existing measure to assist in maintaining the confidentiality of data in a queryable database is by the use of differential privacy. The principle of differential privacy is to provide to each individual roughly the same amount of privacy that would result from having their data removed. This privacy is provided by adding random noise, using a noise generation algorithm, to the queries that make it impossible to reconstruct information about the individuals. There are many such techniques available, such as the Laplace mechanism or other similar mechanisms.

However, such techniques still pose a security issue because the noise generation is deterministic; that is, the noise generated is generated artificially from the data in the database. Therefore, an attacker may make a high number of queries to the database which reveals the noise generation algorithm used. In other words, the noise can be reverse-engineered from an undefined number of queries made to the database. Once characteristics of the noise generation algorithm are known to the attacker, then this may be used to discover further information regarding the data in the database (as the noise generated is dependent on the underlying data). Alternatively, an attacker may discover information regarding the noise generation algorithm from the programmers involved in creating the noise generation algorithm.

Therefore, there exists a need to provide a similar amount of privacy to individuals in a more secure manner (i.e. using a privacy-enhancing technique which is less prone to attack in and of itself).

US 2014/278409 A1 discloses a method for anonymizing non-sanitized texts by modifying feature vectors associated with the non-sanitized texts.

### Summary

According to a first aspect, there is provided a computer-implemented method of generating a queryable database, comprising: receiving a corpus of free text documents containing confidential data, the free text documents related to the same domain; assigning, by a trained Natural Language Processing (NLP) system, one or more abstract named entities to each free text document in the corpus; and storing the abstract named entities of each free text document assigned by the NLP system in a queryable database configured to provide aggregated information regarding the named entities; wherein the NLP system is configured such that the abstract named entities are recognised and disambiguated with a precision between 0.75 and less than 1 and a recall between 0.75 and less than 1, and wherein the ratio of precision and recall is between 0.7 and 1.3; wherein the queryable database is free from the addition of artificial noise by an artificial noise generation algorithm. Keeping the values of precision and recall below 1 adds privacy to the queryable database by making attacks from a high number of aggregated queries less likely to succeed. Keeping the precision and recall above 0.75 ensures an acceptable level of accuracy of the aggregated results. Advantageously, the errors in precision and recall arise from the reading errors of the NLP system itself, rather than being artificially generated. The method therefore results in a queryable database that provides accurate aggregated information whilst ensuring individual privacy, wherein the noise generation process is not discoverable by an attacker due to the noise generation naturally arising from the training process of the NLP system, and from the ambiguities inherent to natural language communication, rather than being artificially inserted. In other words, the method results in a more secure queryable database as the noise generation method itself is not artificial. That is to say, the method results in a more secure queryable database as the noise generation method itself is not random, nor artificially designed in a deterministic manner. By ensuring that the privacy arises from probabilistic errors in recognition and disambiguation, rather than from an artificial noise generation algorithm, an attacker cannot learn about the type of noise generation from a number of database queries. The increased security arises independently of the content of the data in the database as it is based on the precision and recall of the NLP system.

The method may therefore be thought of as ensuring "Natural Privacy" as the privacy arises out of the reading error of the NLP system, rather than arising from artificial noise injected into the database, as in the case of traditional methods of differential privacy.

The precision may be between 0.75 and 0.95. The recall may be between 0.75 and 0.95. More preferably, the precision may be between 0.85 and 0.95 and the recall may be between 0.85 and 0.95. It has been found that these values ensure a similar level of privacy as traditional methods of differential privacy. The ratio of precision and recall may be between 0.8 and 1.2, and preferably 0.9 and 1.1. The number of free text documents received may be at least 49, preferably at least 1000 and more preferably at least 39000.

The NLP system may comprise one or more machine-learning algorithms. The method may comprise the steps of training each of the one or more machine-learning algorithms by: selecting one or more sub-sets of free text documents in the domain; assigning the one or more abstract named entities to the documents in the one or more sub-sets to form one or more training sets; training the one or more machine-learning algorithms using the one or more training sets; selecting a second sub-set of free text documents in the domain; inputting the second sub-set of the corpus of free text documents to the NLP system; evaluating whether the NLP system recognises and disambiguates the abstract named entities with a precision between 0.75 and less than 1 and a recall between 0.75 and less than 1, and wherein the ratio of precision and recall is between 0.7 and 1.3; and if not, re-training the one or more machine-learning algorithms such that the precision, recall and ratio of precision and recall are within the required ranges.

The training may be performed iteratively. This method provides a dynamic training process for forming an NLP system, wherein the differential privacy is ensured by the reading error of the one or more machine learning algorithms.

If upon evaluation, it is required that the precision be lowered, then the one or more machine learning algorithms may be re-trained by providing training data containing abstract named entities assigned to incorrect strings of text. Furthermore, if upon evaluation, it is required that the recall be lowered, then the one or more machine learning algorithms are re-trained by providing training data containing text relating to an abstract named entity which has not been assigned that abstract named entity and/or which has been assigned a different abstract named entity. The NLP system can be deliberately trained to perform worse in order to ensure the required level of privacy.

The training sets can be generated manually by one or more users or by using a second NLP system having a precision and recall above 0.85 and preferably above 0.95. The precision and recall of the NLP system can be evaluated manually by a user or by comparing the output of the NLP system to that of a second NLP system having a precision and recall above 0.85 and preferably above 0.95.

The NLP system may comprise one or more rule-based algorithms. The use of rule-based algorithms on free unstructured text may be a source of noise generation. For example, rule-based algorithms may not be able to detect typos in the text, resulting in a higher number of false negatives. The false negatives may therefore be considered as truly random.

The free text documents may be medical records, and the abstract named entities may comprise patient information and medical terminology.

The named abstract entity and an associated disambiguation term may be stored in the database. The free text documents may be medical records and the NLP system may be trained to assign one or more of the following disambiguation terms to the abstract named entities: patient information, medical history, family medical history, medication history, treatment history, symptoms, test results, evolutions and notes. Alternatively, the free text documents may be insurance records and the NLP system may be trained to assign one or more of the following disambiguation terms to the abstract named entities: loss or damage coverage, derivated risk, risk, legal related content, legal figure, policy action, time event, legal requirement.

According to a second aspect, there is provided a computer program product comprising instructions which, when executed by a computer, cause the computer to: receive a corpus of free text documents containing confidential data, the free text documents related to the same domain; assign, by the trained Natural Language Processing (NLP) system, one or more abstract named entities to each free text document in the corpus; and store the abstract named entities of each free text document assigned by the NLP system in a queryable database configured to provide aggregated data regarding the named entities; wherein the NLP system is configured such that the abstract named entities are recognised and disambiguated with a precision between 0.75 and less than 1 and a recall between 0.75 and less than 1, and wherein the ratio of precision and recall is between 0.7 and 1.3; wherein the queryable database is free from the addition of artificial noise by an artificial noise generation algorithm.

According to a third aspect, there is provided a data processing apparatus for generating a queryable database, comprising a trained Natural Language Processing (NLP) system and configured to: receive a corpus of free text documents containing confidential data, the free text documents related to the same domain; assign, by the trained Natural Language Processing (NLP) system, one or more abstract named entities to each free text document in the corpus; and store the abstract named entities of each free text document assigned by the NLP system in a queryable database configured to provide aggregated data regarding the named entities; wherein the NLP system is configured such that the abstract named entities are recognised and disambiguated with a precision between 0.75 and less than 1 and a recall between 0.75 and less than 1, and wherein the ratio of precision and recall is between 0.7 and 1.3; wherein the queryable database is free from the addition of artificial noise by an artificial noise generation algorithm.

**Brief description of the drawings**

To enable better understanding of the present disclosure, and to show how the same may be carried into effect, reference will now be made, by way of example only, to the accompanying drawings, in which:

FIG. 1 shows a block diagram of an exemplary computer system for generating a queryable database according to the present disclosure;

FIG. 2 shows a method for generating a queryable database according to the present disclosure;

FIG. 3 shows a block diagram of an NLP system according to the present disclosure;

FIG. 4 shows a flow chart illustrating how an NLP system may be trained according to the present disclosure;

FIGs. 5A to 5E illustrate the output of the NLP system in example 1; and

FIG. 6A to 6E illustrate the output of the NLP system in example 2.

**Detailed description**

Throughout this disclosure, the term "domain" may refer to a concept or group of concepts that relate to a single discipline or field. The domain may be represented by a single domain-specific ontology, which may be an industry-standard ontology, a non-industry-standard generated ontology or a user-generated ontology. Examples of a domain include medicine and insurance.

Throughout this disclosure, the term "precision" of a system refers to the fraction of correctly identified and disambiguated abstract named entities by the system compared to the total number of abstract named entities identified by the system. The value is defined as $TP/(TP+FP)$, where TP is the number of true positives and FP is the number of false positives.

Throughout this disclosure, the term "recall" of a system refers to the fraction of correctly identified and disambiguated abstract named entities by the system, compared to the total number of abstract named entities inputted to the system. The value is defined as $TP/(TP+FN)$, where TP is the number of true positives and FP is the number of false positives....

Throughout this disclosure, the term "true positive" refers to a correctly identified and disambiguated abstract named entity. In other words, it refers to a result indicating that an abstract named entity is present when it actually is present. For example, in the context of a document, when a named abstract identity in the text of the document is correctly identified and disambiguated, this named abstract identity is considered a "true positive".

Throughout this disclosure, the term "false positive" refers to an incorrectly identified and disambiguated abstract named entity. In other words, it refers to a result indicating that an abstract named entity is present when it actually is not present. For example, in the context of a document, when a named abstract identity in the text of the document is incorrectly identified and disambiguated, this named abstract identity is considered a "false positive".

Throughout this disclosure, the term "true negative" refers to a correctly ignored fragment of text. In other words, it refers to a result indicating that an abstract named identity is not present when it actually is not present. For example, in the context of a document, if a fragment of text in the document is correctly ignored, this may be considered a "true negative".

Throughout this disclosure, the term "false negative" refers to an abstract named identity that is incorrectly ignored. In other words, it refers to a result indicating that an abstract named identity is not present when it actually is present. For example, in the context of a document, when an abstract named identity is found not to be present when it is actually present in the document, this may be considered a "false negative".

For a given abstract named entity, a document can be considered a "true positive" if the abstract named entity is correctly identified and disambiguated for that document. Similarly, a document can be considered a "false positive" if the particular abstract named entity is incorrectly identified and disambiguated for that document. Further, a document can be considered a "true negative" if the particular abstract named entity is not identified and disambiguated for the document and the document text does not contain the abstract named entity. Finally, a document can be considered a "false negative" if the particular abstract named entity is not identified and disambiguated for the document and the document text does contain the abstract named entity.

Throughout this disclosure, the term "free text" refers to text which is not organized in a predefined manner, as opposed to structured text which may be text stored, for example, in fielded form.

Throughout this disclosure, the term "Natural Language Processing system" or "NLP system" refers to any algorithm or group of algorithms configured to process natural language data. An NLP system may comprise a single algorithm, such as a machine-learning algorithm or rules-based algorithm or may comprise a collection of algorithms configured to be executed in parallel or in series. For example, an NLP system may comprise an algorithm configured to identify and disambiguate one set of abstract named entities, and a further algorithm to identify and disambiguate a second set of abstract named entities. The NLP system may, for example, further comprise a rules-based or machine learning algorithm to identify abbreviations in the free text, and/or an algorithm to identify a context for each identified abstract named entity.

Examples of rules-based algorithms that may be used in the NLP system include:

- manually designed decision trees based on regular expressions, to identify parts of text easily predictable (social security number, quantitative results of tests, medication dosage,...); and
- word matching from a dictionary of words such as an ontology.

Examples of machine learning algorithms that may be used in the NLP system include:

- classification algorithms (such as deep learning, random forest, decision trees, K-NN or similar);
- regression methods (e.g. decision trees, logistic regression, Support vector machines or similar);
- clustering analysis (such as k-means, anomaly detection or similar);
- feature reduction (such as principal component analysis, linear discriminant analysis or similar); and
- feature extraction (such as independent component analysis, covariance analysis, recursive classification or similar).

The learning methods of the machine learning algorithms can be supervised, semi-supervised or unsupervised.

Throughout this disclosure, the term "abstract named entity" may refer to any term belonging to the domain-specific ontology of the domain.

As previously discussed, when automated queries can be made to a database that provides aggregated information regarding the data stored in the database, there exists the risk of an attacker discovering non-disclosed information, such as personal data, by means of a combination of a high number of aggregated queries. Differential privacy is a well-known privacy-enhancing technique, which is based on the principle that a person's privacy cannot be compromised if an observer seeing the aggregated information of the database cannot tell if the data of a particular individual was used. This is ensured by the addition of random noise to the database (for example by the addition of false positives or false negatives to the aggregate results), which inhibits an observer's ability to reconstruct the information about any one individual contained in the database from the combination of queries.

In the methods disclosed herein, false positives and false negatives are similarly present in the data saved in the database, meaning that privacy is ensured in the same way as for differential privacy.

The formal justification for the methods disclosed herein can be summarised as follows.

The use of a Natural Language Processing (NLP) system to identify (i.e. recognise and disambiguate) named abstract identities that appear in a text is subject to errors. The NLP system may make two types of errors - it may detect an abstract named entity where it does not appear (a false positive), or conversely, it may fail to identify an abstract named entity appearing in the text (a false negative).

The accuracy of the NLP system is determined by these two types of errors and can be summarised by two parameters, precision and recall, which are defined as follows:

$$Precision = \frac{TP}{TP + FP}$$

$$Recall = \frac{TP}{TP + FN}$$

Where TP is the number of true positives, FP is the number of false positives and FN is the number of false negatives. For example, for a particular abstract named entity, TP may be the number of true positive documents, FP the number of false positive documents and FN the number of false negative documents.

The true frequency (P*) (e.g. prevalence) that an abstract named concept appears in a text is the sum of the number of true positive and false negatives (i.e. the number of times the abstract named entity actually appears in the texts, or the number of documents in which a particular abstract named entity actually appears). This can be summarised as follows:

$$P^* = TP + FN = P * \frac{Precision}{Recall} = (TP + FP) * \frac{Precision}{Recall}$$

Where P is the total number of times the abstract named entity is identified by the NLP system (i.e. TP + FP). More particularly, P is the total number of documents in which the abstract named entity is identified by the NLP system. It therefore follows that if Precision and Recall take similar values, the frequency of abstract named entities identified by the NLP system is a similar value to the actual number of times the abstract named entity appears in the texts. In other words, Precision/Recall $\approx$ 1.

As explained in further detail below, the ratio of precision and recall need not be exactly 1. The ratio of these values may take any value within a range of values about 1, depending on the required accuracy of the results. For example, in some applications a ratio of between about 0.7 and 1.3 may be acceptable. In applications where a higher accuracy is required, the lower bound of the ratio may be 0.8, 0.9 or 0.95, and the upper bound of the ratio may be 1.2, 1.1 or 1.05 (with any combination of the upper bound values and lower bound values being contemplated).

As any estimation of Precision and Recall is subject to errors (due to the analysis of Precision and Recall being based on a subset of a corpus of texts), they will differ from the true value by errors $\varepsilon 1$ and $\varepsilon 2$:

$$\frac{Actual\ Precision}{Actual\ Recall} = \frac{Mesaured\ Precision + \varepsilon 1}{Measured\ Recall + \varepsilon 2}$$

The measured values of Precision and Recall will therefore be accurate if the errors $\varepsilon 1$ and $\varepsilon 2$ are low compared to the measured Precision and Recall. Therefore, Precision and Recall must be relatively high (i.e. positive and reasonably close to one, for example at least 0.70, and more preferably at least 0.75). It will also be appreciated by the skilled person that an adequately sized subset of the corpus is to be selected that is statistically representative of the corpus, such that the errors $\varepsilon 1$ and $\varepsilon 2$ are sufficiently low, as is known in the art.

The probability of errors when identifying an abstract named entity can be summarized as follows:

$$Error_1 = \frac{FP}{n} = \frac{TP}{n} \cdot \frac{1 - Precision}{Precision}$$

$$Error_2 = \frac{FN}{n} = \frac{TP}{n} \cdot \frac{1 - Recall}{Recall}$$

Where *FP* and *FN* are the rates for false positives and negatives respectively, *TP* is the number of true positives and *n* is the total number of documents.

For acceptable error probabilities, the bounds for precision and recall can be derived based on the proportion of positives (the average proportion of texts where the particular concepts appear, *TP/n*). Target values for precision and recall based on the target values for the errors as a function of the estimation of true positives are therefore summarized as follows:

$$TargetPrecision = \frac{1}{\frac{TargetError_1}{TP/n} + 1}$$

$$TargetRecall = \frac{1}{\frac{TargetError_2}{TP/n} + 1}$$

For target errors of 5% and a ratio of positives of 50%, the target values of precision and recall are 90.90%. For a target error of 10%, the target values of precision and recall are 83.33%.

From the definitions of P, P* and Precision and Recall given above, it can be derived that the total number of positives in the corpus (e.g. the number of documents with the abstract named entity detected) is:

$$P = (TP + FP) = P^* * \left(1 + \frac{Recall - Precision}{Precision}\right) = P^* * \left(\frac{Recall}{Precision}\right)$$

The average number of positives per document (i.e. probability that a document has had the abstract named entity detected) can therefore be taken as a Bernoulli distribution with a probability:

$$p = \frac{P^*}{n} * (1 + \frac{Recall - Precision}{Precision})$$

Where n is the total number of documents. Therefore, by aggregating results across the corpus the distribution can be modelled as a binomial, wherein the parameters of the binomial are:

$$n_{BINOMIAL} = n$$

$$p_{BINOMIAL} = p$$

The binomial can be considered a normal distribution for large enough n, for instance if n*p>5 and n(1-p)>5, with a normal distribution summarised as:

$$N(np, \sqrt{np(1-p)})$$

The proportion of documents in the corpus where an abstract named entity has been identified can therefore be modeled by means of a normal distribution of the following parameters:

$$\mu = np = P^* \cdot \left(\frac{Recall}{Precision}\right)$$

$$\sigma = \sqrt{\frac{1}{n} \cdot \left(P^* \cdot \frac{Recall}{Precision}\right)\left(1 - P^* \cdot \frac{Recall}{Precision}\right)}$$

Knowing that the concept frequency as read by the NLP system will be contained in the confidence intervals $[\mu - z \cdot \sigma, \mu + z \cdot \sigma]$, where z is a parameter (for instance, z = 2 would yield $Prob(P \in [\mu - z \cdot \sigma, \mu + z \cdot \sigma])$)=0.95.

In order to have an estimation centered around the true value P* (i.e. in order to have the standard deviation take a low value), it is necessary to have similar values of precision and recall:

$$\frac{Precision}{Recall} \approx 1$$

This means that, if an error or confidence interval of 10% (measured as a proportion of the true prevalence P*) is considered acceptable, the ratio between precision and recall should be:

$$0.90 < \frac{Precision}{Recall} < 1.10$$

In different applications, different error values may be acceptable, in which case the ratio of precision and recall may take a broader (or narrower) range of acceptable values.

The half-width of the confidence interval expressed as a proportion of its average would be:

$$hw = \frac{z \cdot \sigma}{\mu} = z \cdot \sqrt{\frac{1}{n} \cdot \frac{\left(1 - P^* \cdot \frac{Recall}{Precision}\right)}{\left(P^* \cdot \frac{Recall}{Precision}\right)}}$$

$$n = \frac{z^2}{hw^2} \cdot \frac{\left(1 - P^* \cdot \frac{Recall}{Precision}\right)}{\left(P^* \cdot \frac{Recall}{Precision}\right)}$$

For a half-width of 10% of the mean for a confidence level of 95% (z = 2), assuming a proportion of 50% of documents where the read entity appears (i.e. P*/n) and a ratio $\frac{Precision}{Recall} = 0.90$, we get a necessary number of documents n = 49. The most sensitive parameter is the prevalence. In conditions where $P^*/n$ = 10%, the number of documents would be $n$ = 39600. In summary, the number of documents in the corpus may be selected based on the particular circumstances of the application (i.e. the nature of the entities being read and the desired confidence level).

Differential privacy mechanisms limit the amount of information about a particular subject that can be extracted from different queries to the database. This section calculates the impact of precision and recall in a specific, stylized example. The example is exemplary only, to portray in an abstract manner the benefits of the noise introduced in the NLP methods disclosed herein.

Let us assume that the attacker knows the value of $f$ + 1 different variables for the target subject, and that the average frequency of these terms is $p$. The database contains $N$ subject in total. The number of subjects that will appear in a query containing $f$ filters is:

$$N \cdot p^f$$

The attacker builds two queries where the difference in the filtered subjects is as low as possible, ideally one. This means:

$$N \cdot p^f - N \cdot p^{f+1} \approx 1$$

The number of variables that the attacker needs to know beforehand about the subject is larger for larger frequencies and smaller for lower ones. For instance, if the terms the attacker knows about the subject are relatively rare (for instance, with $p$ = 5%) and uncorrelated, with $N$ = 1,000,000 subjects it would suffice to know 6 fields. If the terms are more frequent, he would need to know that the subject has a positive reading for 20 variables.

The errors in the NLP reading process make it more difficult to use the information to build the attack. This can be conceptualized as follows:

The probability that a true positive stays that way (that is, the probability of the target subject staying in the query after noise is introduced) is:

$$Recall^f$$

The probability of the query not getting any new subjects (from false positives) is:

$$\left( \frac{1 - p}{1 - p + p \cdot \left( \frac{1}{Precision} - 1 \right)} \right)^{f}$$

This means that the probability of the two queries still containing the target subject and having a differential of one subject is:

$$\left( \frac{Recall(1 - p)}{1 - p + p \cdot \left( \frac{1}{Precision} - 1 \right)} \right)^{f}$$

In the examples below, this means that, with *Precision = Recall* = 0,85 (which, as outlined above, maintained the accuracy of aggregated results), the attack in the case for *p* = 5%, the attack would only be successful in 42% of the cases.

In the other case, with *p* = 50%, the attack would be successful with only 0.2% probability.

If *Precision = Recall* = 0,75, the attacks would be successful with probability 22% and 1.78E-5.

With the above analysis in mind, will be understood that an NLP system having at least one of precision and recall below 1 and both above 0.75, and having the required range of ratio values, can be used in generating a queryable database where differential privacy is required, instead adding artificial noise to a database as in traditional methods of differential privacy. The particular values for precision, recall and the ratio between these values may vary depending on the requirements of any particular application. It has been found that when precision and recall take values between 0.75 and 0.95, and preferably 0.85 and 0.95, and the ratio of precision to recall is between 0.7 and 1.3, and preferably between 0.9 and 1.1, the NLP system preserves individual privacy whilst also providing accurate aggregated results. The number of documents in the corpus is preferably above 49, preferably above 1000 and even more preferably above 39000.

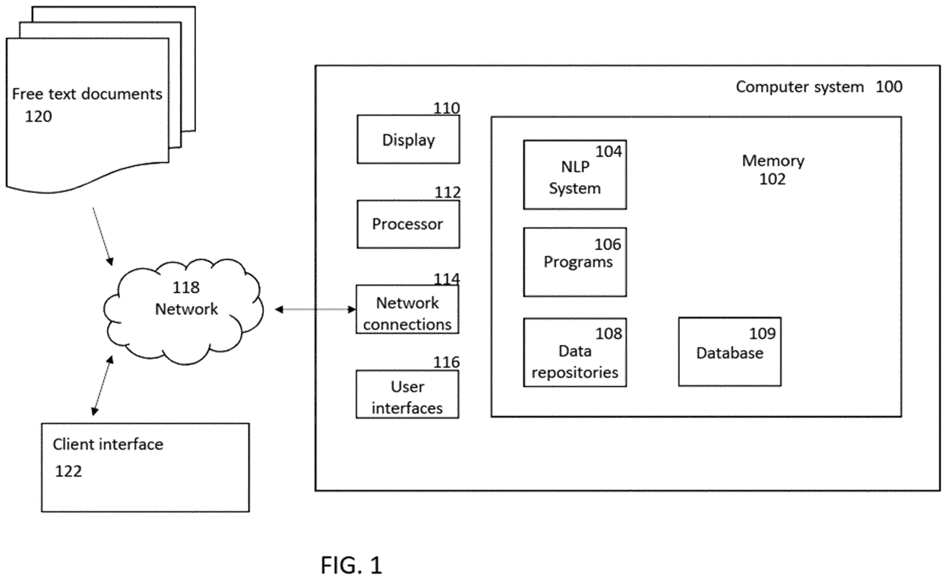

Fig. 1 shows a block diagram of an exemplary computer system 100 (i.e. a data processing apparatus) for generating a queryable database according to the present disclosure.

It will be appreciated by the skilled person that the computer system 100 shown in Fig. 1 is one of many systems that could be used to implement the methods disclosed herein. In other examples, the computer system may a distributed computer system, for example comprising one or more servers or client computing systems, using any known distributed computing technique. In some examples, a general-purpose computer or any other processing system may be used to implement the methods disclosed herein. Furthermore, the NLP system 104 may be implemented in software, hardware, or any combination of these to achieve the methods disclosed herein.

The computer system 100 comprises a memory 102, a display 110, a processor 112, one or more network connections 114 and one or more user interfaces 116. The memory 102 comprises a Natural Language Processing system (NLP system) 104, one or more programs 106, one or more data repositories 108 and a queryable database 109. Whilst the NLP system 104 is shown as being stored in the memory 102, some or all of it may be stored elsewhere, such as in other computer-readable media (not shown). The NLP system 104 and one or more programs 106 are executable on the processor 112 to perform the methods disclosed herein. The display 110 and one or more user interfaces 116 (such as one or more input interfaces) may used by a user to operate one or more programs 106 to perform the manual steps of the methods disclosed herein, such as the manual training steps.

It will be appreciated by the skilled person that the computer system 100 may be powered by any suitable powering means. The memory 102 may comprise one or more volatile or non-volatile memory devices, such as DRAM, SRAM, flash memory, read-only memory, ferroelectric RAM, hard disk drives, floppy disks, magnetic tape, optical discs, or similar. Likewise, the processor 112 may comprise one or more processing units, such as a microprocessor, GPU, CPU, multi-core processor or similar. The network connections 114 may be wired, such as optic, fiber-optic, ethernet or similar, or any suitable wireless communication.

In other examples, some components shown in Fig. 1 may not be present. For example, in the methods disclosed herein that do not require a manual user input, the display 110 and some of the one or more user interfaces 106 may not be required. In further examples, the user input may be provided externally instead via a network connection 114 of the computer system 100. Further components may be present which are not shown in Fig. 1. For example, the computer system 100 may comprise a plurality of processors 112.

The NLP system 104 comprises one or more components which together function to implement the methods disclosed herein. The components may comprise one or more NLP machine-learning algorithms and/or NLP rules-based algorithms, which may be run in series or in parallel, depending on the nature of the text to be analysed in the method. It will be appreciated by the skilled person that the NLP system 104 may be implemented using standard programming techniques, and that any suitable programming language may be used to implement the methods disclosed herein. For example, the NLP system 104 may be an executable ran on the computer system 100, or may be implemented using any alternative programming technique known in the art. For example, when the NLP system 100 comprises a number of components, each component may be run separately in separate processors or computer systems, either in series or in parallel as required using any known distributed computing technique.

Furthermore, the queryable database 109 may be stored separately to the computer system 100, with the processor 112 transmitting the output of the NLP system 104 to the database via the one or more network connections 114 or via another data connection.

The computer system 100 is configured to communicate with a network 118 via one or more network connections 114. The computer system 100 is able to receive a corpus of free text documents 120 via the network 118. The received corpus of free text documents are analysed by the NLP system 104 and the results are stored in the database 109. Furthermore, the computer system 100 is configured to receive inputs and transmit outputs to a client interface 122 via the network 118. For example, the client interface 122 may be any suitable interface such as a web interface or other suitable search interface, through which a client is able to make searches for aggregated information from the database 109. The client may make a query, which is sent to the computer system 100 via the network 118. The query may be received by one or more programs 106 stored in the memory 102, which causes the processor 112 to search the database 109 accordingly. The processor 122 then causes the results of the search, i.e. aggregated information regarding the databased 109, to the client interface 122 via the network 118. Alternatively, or additionally, similar aggregated queries may be made via the one or more user interfaces 116 of the computer system 100.

The network 118 may be any suitable network for transmitting data between the components of the network, such as a wireless or wired network. The client interface 122 may be a web application accessible via the internet, for example.

It will be appreciated by the skilled person that many other variations of the computer system 110, network 118 and client interface 122 suitable for implementing the methods disclosed herein are contemplated by this disclosure.

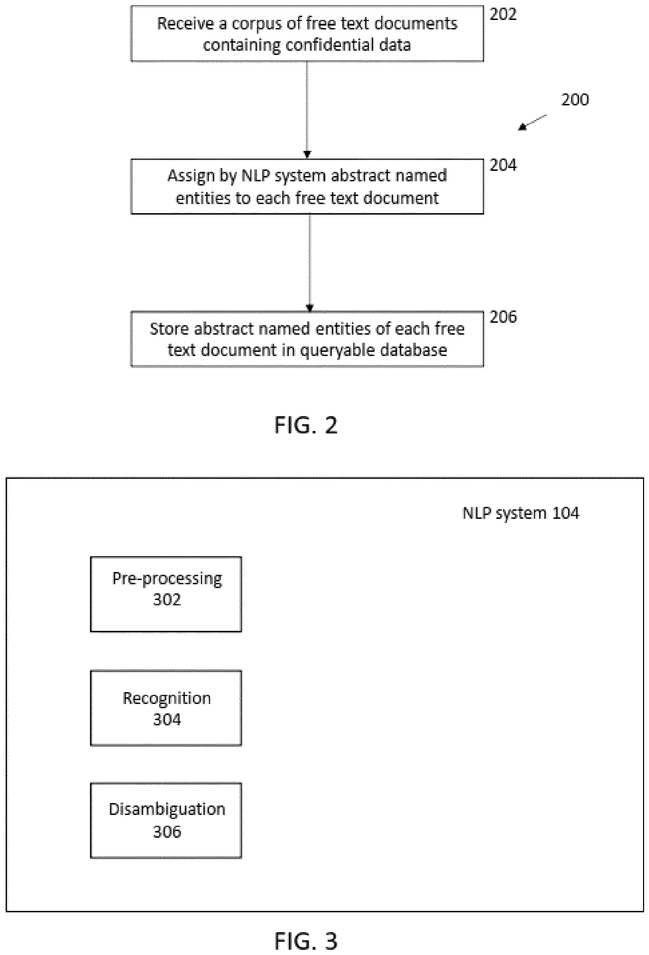

Fig. 2 shows a method 200 for generating a queryable database according to the present disclosure.

In a first step 202, a corpus of free text documents containing confidential data is received. The corpus of free text documents may comprise over 49 documents, over 1000, over 39000 or more. For example, the computer system 100 may receive a corpus of free text documents 120 via a network 118. The free text documents are related to the same domain. For example, the free text documents may be in the field of insurance (for example insurance claims reports) or the field of medicine (for example medical records).

Subsequently, in step 204, the free text documents are each assigned one or more abstract named entities by an NLP system. For example, the NLP system 104 is executed by the processor 112 to process the text contained in each document, with abstract named entities being identified in each document. The NLP system is trained such that the abstract named entities are recognised and disambiguated with a precision between 0.75 and less than 1 (preferably between 0.75 and 0.95 and more preferably between 0.85 and 0.95) and a recall between 0.75 and less than 1 (preferably between 0.75 and 0.95 and more preferably between 0.85 and 0.95), and such that the ratio of precision and recall is between 0.7 and 1.3, and preferably between 0.8 and 1.2, and more preferably between 0.9 and 1.1. Each assigned abstract named entity may be associated with a portion of text in the free text documents. As previously discussed, the recall and precision being below 1 ensures a level of individual privacy, with the minimum values of recall and precision and their ratio ensuring that the aggregated information is still accurate. The NLP system may be trained according to the training methods disclosed herein.

Finally, in step 206, the assigned abstract named entities for each document are stored in a queryable database such as database 109.

Once the method is complete, a user may make aggregated queries to the queryable database, for example from client interface 122 via network 118 or from a user interface 116, with the database being processed based on the query to generate the requested aggregated information (e.g. by a program 106 executed by a processor 112) and provided to the user.

Fig. 3 shows a block diagram of an exemplary NLP system 104. The NLP system 104 comprises a pre-processing engine 302, a recognition engine 304 and a disambiguation engine 306. Whilst these are presented as separate components in the NLP system 104, it will be apparent to the skilled person that they may be comprised in a single module or otherwise.

The pre-processing engine 302 is configured to receive a corpus of free text documents and pre-process the documents in preparation for the recognition and disambiguation processes. For example, the pre-processing engine 302 receives the corpus of free text documents 120 via the network 118. The pre-processing engine 302 then differentiates the free text into sentences, and divides each sentence into tokens. Finally, the pre-processing engine 302 converts the sentences into a token vector.

For example, the pre-processing engine 302 may receive the following text:

This 23-year-old white female presents with complaint of allergies. She used to have allergies when she lived in Seattle but she thinks they are worse here.

The pre-processing engine 302 then differentiates the text into sentences and tokens as follows:

Sentence 1:    [This] [23] [-] [year] [-] [old] [white] [female] [presents] [with] [complaint] [of] [allergies][.]

Sentence 2:    [She] [used] [to] [have] [allergies] [when] [she] [lived] [in] [Seattle] [but] [she] [thinks] [they] [are] [worse] [here][.]

Wherein [*text*] indicates a token. The sentences are then converted into token vectors as follows:

Sentence 1: ["This", "23", "-", "year", "-", "old", "white", "female", "presents", "with", "complaint", "of", "allergies", "."]

Sentence 2: ["She", "used", "to", "have", "allergies", "when", "she", "lived", "in", "Seattle", "but", "she", "thinks", "they", "are", "worse", "here", "."]

The recognition engine 304 is configured to analyse token vectors to recognise the abstract named entities in the text. The recognition engine 304 may comprise one or more rules-based algorithms and machine-learning algorithms as described herein. For example, the recognition engine 302 receives the token vectors of the sentences in each text of the corpus from the pre-processing engine 302 and detects and classifies abstract named entities in the texts.

For example, the recognition engine receives the token vectors of sentence 1 and sentence 2 above, and recognises the following entities:

Sentence 1:[["23", "-", "year", "-", "old"], ["female"], ["allergies"]]

Sentence 2: [["used", "to", "have", "allergies"]]

The disambiguation engine 306 is configured to normalise recognised entities to an existing terminology (i.e. from an ontology). The disambiguation engine 306 is further configured to apply some context information from the token vector in order to assist in disambiguating the entities. For example the disambiguation engine 306 receives the abstract named entities from the recognition engine 304 and disambiguates them. The disambiguation engine 306 may comprise one or more rules-based algorithms and machine-learning algorithms as described herein.

For example, the disambiguation engine 206 received the entities of sentence 1 and sentence 2 above, and disambiguates them as follows:

Sentence 1: [Age - 23], [Gender - female] [Diagnosis - allergies]

Sentence 2: [Personal background - allergies]

It will be apparent to the skilled person that other NLP systems may be used, dependent on the content of the unstructured text to be analysed. In particular, any NLP system 104 may be used which is able to analyse the corpus of free text documents such that the abstract named entities are recognised and disambiguated at the required precision and recall levels.

For example, any suitable text tokenization and vectorization process could be used for the pre-processing engine 302. It is noted that the text pre-processing module 302 may also perform any manner of text pre-processing as required, such as pre-formatting of text, removal of punctuation or similar.

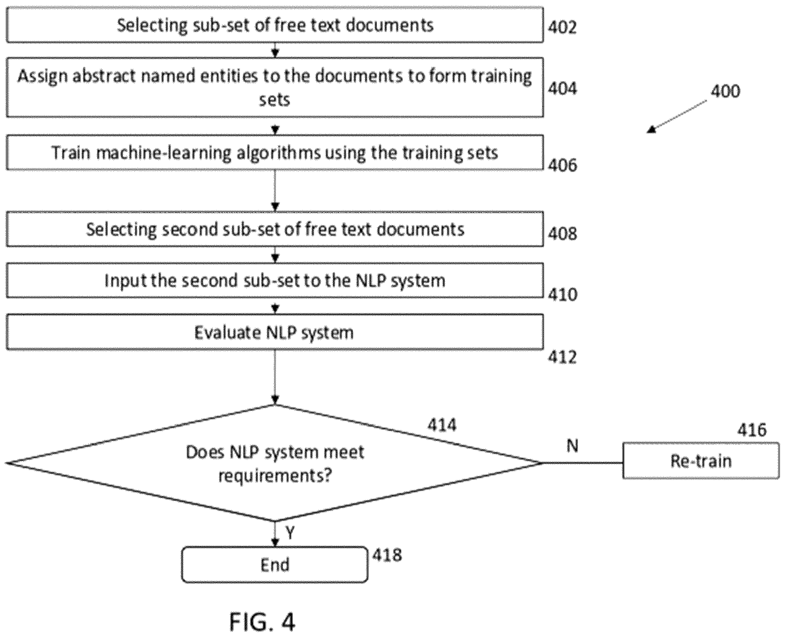

FIG. 4 shows a method 400 for training an NLP system comprising one or more machine learning algorithms according to the present disclosure.

In a first step 402, one or more sub-sets of free text documents in the domain is selected. These sub-sets may be provided from the corpus of free text documents to be analysed or separately provided.

Secondly, in step 404, the one or more abstract named entities are assigned to each document in the one or more sub-sets to form one or more training sets, wherein the assigned abstract named entities in each sub-set are the target outputs for each respective machine learning algorithm.

In step 406, the one or more machine learning algorithms are trained using the one or more training sets. In other words, the training sets are provided to the machine learning algorithms and the machine learning algorithms analyse the respective documents and their assigned abstract named entities to train the machine learning algorithm.

Next, a second sub-set of free text documents in the domain is selected in step 408. The second sub-set may be taken from the corpus of text documents or may be separately sourced.

Subsequently in step 410, the second sub-set of free text documents in input to the NLP system. The NLP system is then evaluated to ascertain whether the NLP system recognises and disambiguates the abstract named entities with a precision between 0.75 and less than 1 (or between 0.75 and 0.95, or between 0.85 and 0.95) and a recall between 0.75 and less than 1 (or between 0.75 and 0.95, or between 0.85 and 0.95), and wherein the ratio of precision and recall is between 0.7 and 1.3 (or between 0.8 and 1.2, or between 0.9 and 1.1). If these requirements are met, then the training process ends (step 418). If not, then the one or more machine learning algorithms are re-trained (step 416), for example by generating new training sets and using the new training sets to train the algorithms. In some examples, the method shown in Fig. 4 is performed iteratively until the values of recall, precision and their ratio are met (i.e. if the answer to step 414 is "no", then the method reverts back to step 402).

It is noted in particular that the precision and recall values may be too high to ensure a satisfactory level of individual privacy. In that case, further training data may be provided to the training models which contain an increased number of false negatives and/or false positives. For example, if precision must be lowered, then training data may be provided that contains abstract named entities assigned to incorrect strings of text. If the recall must be lowered, then training data may be provided that contains text relating to an abstract named entity which has not been assigned that abstract named entity and/or which has been assigned a different abstract named entity.

Where the NLP system comprises a plurality of machine learning algorithms, the algorithms can be trained using the same sub-set of documents or different sub-sets.

In some examples, the training sets can be generated manually by one or more users. In particular, the user(s) may manually assign the abstract named entities to the free text documents according to a set of guidelines. For example, if the free text documents are medical records, the user(s) may be medical practitioners trained to assign the relevant abstract named entities to the free text documents. The precision and recall may similarly be evaluated with the assistance of the user(s), wherein the user(s) correctly assign the abstract named entities to the second sub-set of documents, with the user assignment of the abstract named entities being compared to the output of the NLP system with the second sub-set. In the evaluation, the user assignments are considered the correct assignments to calculate the number of true positives, true negatives, false positives and false negatives of the NLP system.

Alternatively, the training sets can be generated by inputting the first sub-set(s) of documents to a second NLP system having a precision above 0.85 (preferably above 0.95) and a recall above 0.85 (preferably above 0.95) (an NLP system having values of precision and recall above these thresholds is considered to have an error rate similar to a human error rate). The precision and recall of the first NLP system may then be evaluated by inputting the second sub-set of documents to the second NLP system and considering the abstract named entity assignments of the second NLP system to be correct. The output of the first NLP system may then be compared to the assignments made by the second NLP system to calculate the number of true positives, true negatives, false positive and false negatives and therefore to calculate precision and recall.

It will be appreciated by the skilled person that the training method above is exemplary and any suitable method of training the NLP system may be used, which are well known in the art.

The methods disclosed herein will now be discussed with reference to example corpora of free text documents.

Example 1 - Medical record

The following documents are examples of medical records that form a corpus of free text documents.

Document 1 (Subject A)

*This 23-year-old white female presents with complaint of allergies. She used to have allergies when she lived in Seattle but she thinks they are worse here. In the past, she has tried loratadine, and cetirizine. Both worked for short time but then seemed to lose effectiveness. She has used fexofenadine also. She used that last summer and she began using it again two weeks ago. It does not appear to be working very well. She has used over-the-counter sprays but no prescription nasal sprays. She does have asthma but doest not require daily medication for this and does not think it is flaring up.,MEDICATIONS: , Her only medication currently is norgestimate and the fexofenadine.*

Document 2 (Subject B)

*He has gastroesophageal reflux disease.,PAST SURGICAL HISTORY:, Includes reconstructive surgery on his right hand 13 years ago. , SOCIAL HISTORY:, He is currently single. He has about ten drinks a year. He had smoked significantly up until several months ago. He now smokes less than three cigarettes a day.,FAMILY HISTORY:, Heart disease in both grandfathers, grandmother with stroke, and a grandmother with diabetes. Denies obesity and hypertension in other family members., CURRENT MEDICATIONS:, None., ALLERGIES:, He is allergic to Penicillin.*

*Document 3 (Subject C)*

*HISTORY OF PRESENT ILLNESS: , I have seen ABC today. He is a very pleasant gentleman who is 42 years old, 344 pounds. He is 5'9". He has a BMI of 51. He has been overweight for ten years since the age of 33, at his highest he was 358 pounds, at his lowest 260. He is pursuing surgical attempts of weight loss to feel good, get healthy, and begin to exercise again. He did six months of not drinking alcohol and not taking in many calories. He has been on multiple commercial weight loss programs including Slim Fast for one month one year ago and Atkin's Diet for one month two years ago.*

*Document 4 (Subject D)*

*2-D M-MODE: , ,1. Left atrial enlargement with left atrial diameter of 4.7 cm., 2. Normal size right and left ventricle., 3. Normal Z V systolic function with left ventricular ejection fraction of 51%.,4. Normal Z V diastolic function.,5. Normal morphology of aortic valve, mitral valve, tricuspid valve, and pulmonary valve.*

*Document 5 (Subject E)*

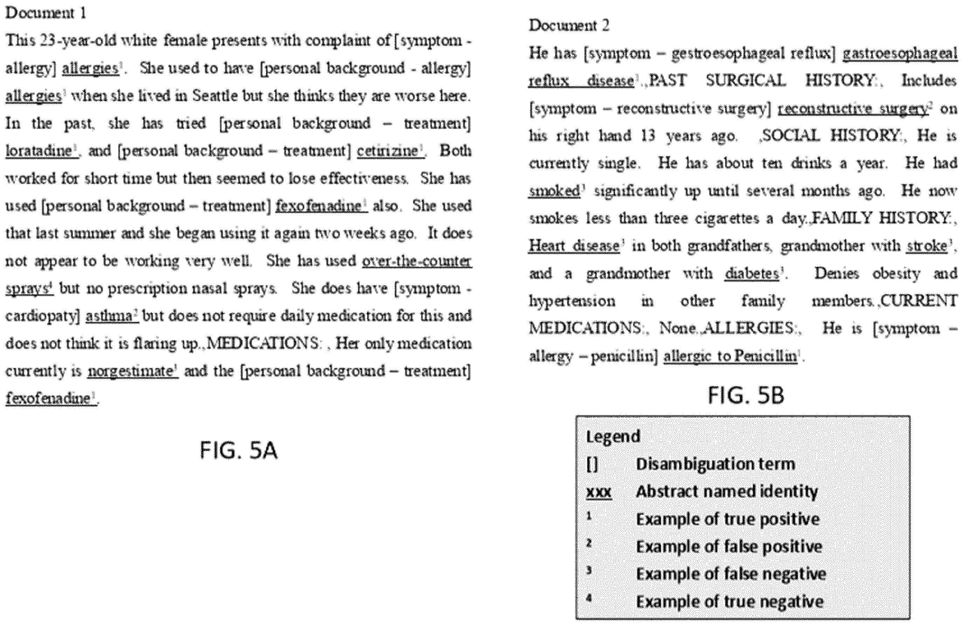

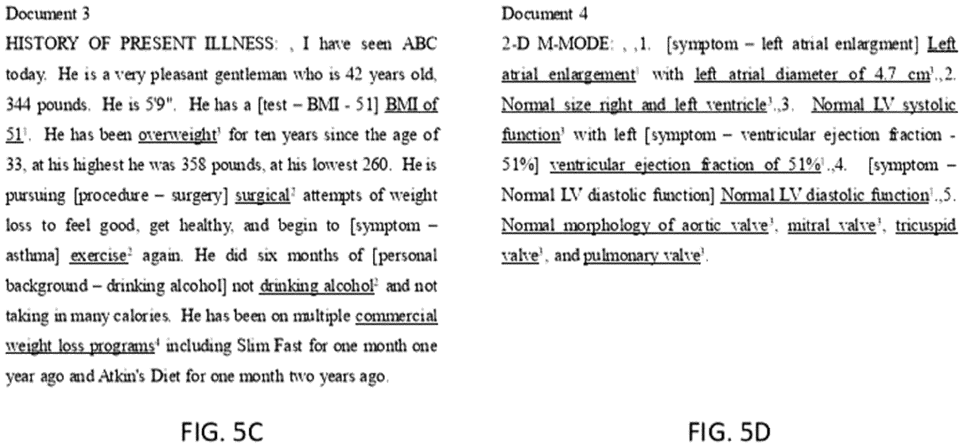

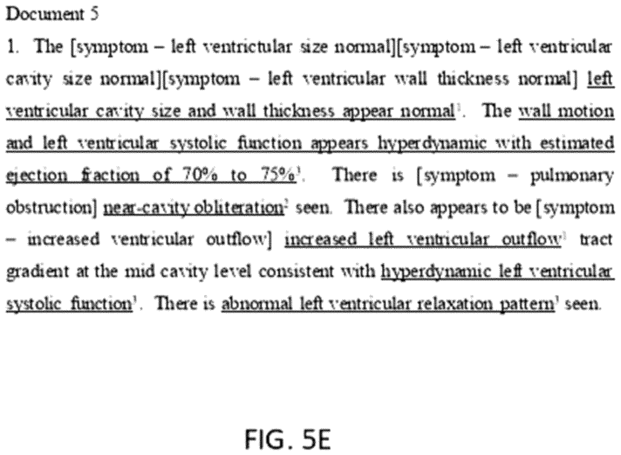

*1. The left ventricular cavity size and wall thickness appear normal. The wall motion and left ventricular systolic function appears hyperdynamic with estimated ejection fraction of 70% to 75%. There is near-cavity obliteration seen. There also appears to be increased left ventricular outflow tract gradient at the mid cavity level consistent with hyperdynamic left ventricular systolic function. There is abnormal left ventricular relaxation pattern seen.*
The documents above may be provided to an NLP system which is trained to recognise and disambiguate the abstract named identities with the required precision and recall. The output of the NLP system is illustrated in Figs. 5A to 5E.
It will be seen that the output of the NLP system has a mixture of true positives, false positives, true negatives and false negatives.
The NLP system then saves the results of the output (i.e. the true and false positives) into a queryable database as follows (the column indicating whether the record is a true positive or a false positive is for illustration purposes only).

Medical record sample storage

| Subject | Term | Abstract Named Entity | TP or FP? |
|---|---|---|---|
| A | [symptom - allergy] | allergies | TP |
| A | [personal background - treatment] | loratadine | TP |
| A | [personal background - treatment] | cetirizine | TP |
| A | [personal background - treatment] | fexodenadine | TP |
| A | [symptom - cardiopaty] | asthma | FP |
| B | [symptom - gestroesophageal reflux] | gastroesophageal reflux disease | TP |
| B | [symptom - reconstructive surgery] | reconstructive surgery | FP |
| B | [symptom - allergy - penicillin] | allergic to Penicillin | TP |
| C | [test - BMI - 51] | BMI of 51 | TP |
| C | [symptom - asthma] | exercise | FP |
| D | [symptom - left atrial enlargment] | Left atrial enlargement | TP |
| D | [symptom - ventricular ejection fraction - 51%] | ventricular ejection fraction of 51% | TP |
| D | [symptom - Normal LV diastolic function] | Normal LV diastolic function | TP |
| E | [symptom - left ventrictular size normal] | left ventricular cavity size and wall thickness appear normal | TP |

(continued)

| Subject | Term | Abstract Named Entity | TP or FP? |
|---|---|---|---|
| E | [symptom - left ventricular cavity size normal] | left ventricular cavity size and wall thickness appear normal | TP |
| E | [symptom - left ventricular wall thickness normal] | left ventricular cavity size and wall thickness appear normal | TP |

Aggregate queries can then be made to the queryable database. For example, the following queries can be made:

# of patients with allergies: 40% (2)
# of patients with normal left ventricular wall thickness: 20% (1)
# of patients with asthma: 20% (1).

Example 2 - Insurance

The following documents are examples of insurance records that form a corpus of free text documents.

*Document 1 (Subject A)*

*Radioactive Contamination*

*This Policy does not cover any loss or damage arising directly or indirectly from nuclear reaction nuclear radiation or radioactive contamination however such nuclear reaction nuclear radiation or radioactive contamination may have been caused * Nevertheless if fire is an insured peril and a fire arises directly or indirectly from nuclear reaction nuclear radiation or radioactive contamination any loss or damage arising directly from that fire shall (subject to the provisions of this Policy)*

*Document 2 (Subject B)*

*Infectious Disease*

*That notwithstanding anything contained to the contrary in the Policy the cover hereunder does not extend to include injury, sickness or death of an insured person or any liability attaching to the Insured for loss of or damage to third party property, injury, sickness or death of a third party as a result of claims arising directly or indirectly from, caused by, happening through, in consequence of or in any way attributable to Infectious Disease, Avian Flu or from any disease that has been declared as an epidemic by the World Health Organization.*

*Document 3 (Subject C)*

*Arbitration*

*Any dispute arising out of this Policy shall be referred to the decision of an Arbitrator to be appointed by both parties or if they cannot agree upon a single arbitrator to the decision of two arbitrators one to be appointed in writing by each party (within one month after being required in writing to do so by either party). The two arbitrators shall then mutually appoint an umpire who shall have been appointed in writing by the arbitrators. The umpire shall sit with the arbitrators and preside at their meetings. The making of an award by the arbitrator, arbitrators or umpire shall be a condition precedent to any right of action against Us*

*Document 4 (Subject D)*

*Mortgage*

*It is hereby agreed that in the event of any loss or damage that is insured hereunder, We will pay the Mortgagees or said Assignees as stated on the Schedule to the extent of their interest and that this insurance insofar as concerns the interest therein of the Mortgagees or said Assignees only shall not be invalidated by any act or neglect of the Mortgagor or Owner of the Buildings.*

*Document 5 (Subject E)*

*Cancellation by Us*

*We have the right to cancel this Policy by giving You seven (7) days by registered mail notice in writing to Your last known address. If a claim has been made, or an incident that may give rise to a claim has been reported, then no refund of premium will be due. If no claim has been made then we will refund you a pro rata premium in proportion to the amount of time that Your Policy has been in force.*

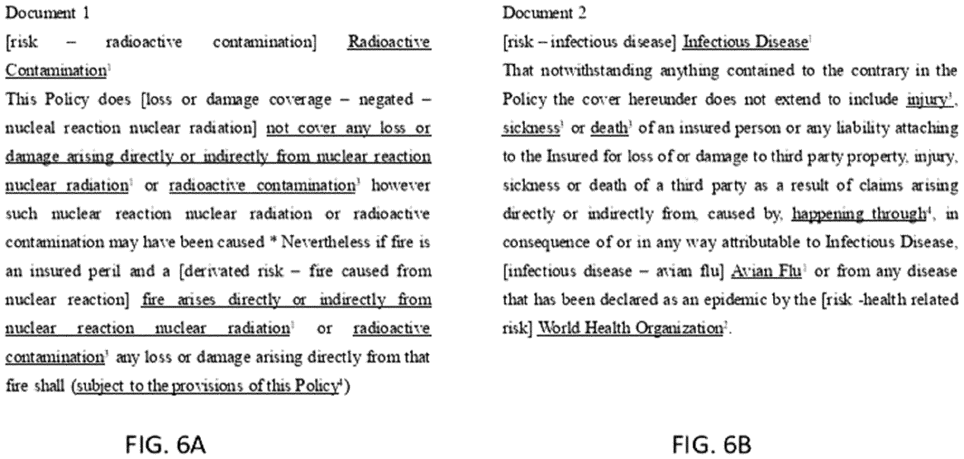

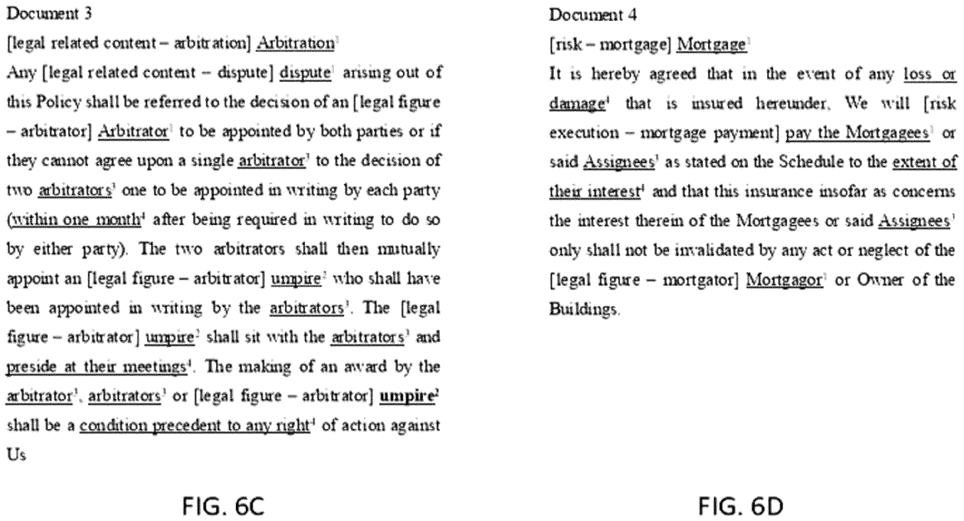

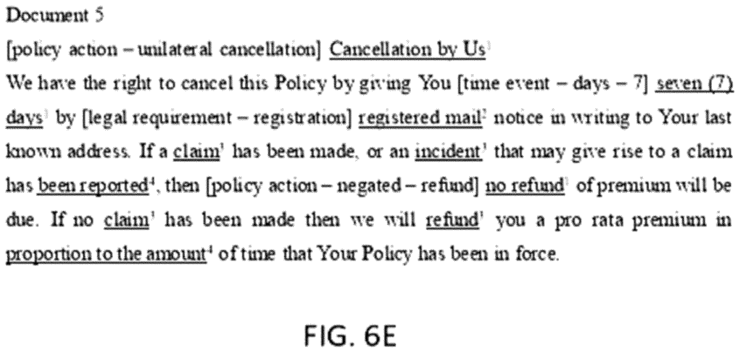

The documents above may be provided to an NLP system which is trained to recognise and disambiguate the abstract named identities with the required precision and recall. The output of the NLP system is illustrate in Figs. 6A to 6E.

It will be seen that the output of the NLP system has a mixture of true positives, false positives, true negatives and false negatives.

The NLP system then saves the results of the output (i.e. the true and false positives) into a queryable database as follows (the column indicating whether the record is a true positive or a false positive is for illustration purposes only).

Insurance record sample storage

| Subject | Term | Abstract Named Entity | TP or FP? |
|---|---|---|---|
| A | [loss or damage coverage - negated - nucleal reaction nuclear radiation] | not cover any loss or damage arising directly or indirectly from nuclear reaction nuclear radiation | TP |
| A | [derivated risk - fire caused from nuclear reaction] | fire arises directly or indirectly from nuclear reaction nuclear radiation | TP |

| | | | |
|---|---|---|---|
| A | [risk - radioactive contamination] | Radioactive Contamination | TP |
| B | [risk - infectious disease] | Infectious Disease | TP |
| B | [infectious disease - avian flu] | Avian Flu | TP |
| B | [risk -health related risk] | World Health Organization | FP |
| C | [legal related content - arbitration] | Arbitration | TP |
| C | [legal related content - dispute] | dispute | TP |
| C | [legal figure - arbitrator] | Arbitrator | TP |
| C | [legal figure - arbitrator] | umpire | FP |
| D | [risk - mortgage] | Mortgage | TP |
| D | [risk execution - mortgage payment] | pay the Mortgagees | TP |
| D | [legal figure - mortgator] | Mortgagor | TP |
| E | [policy action - unilateral cancellation] | Cancellation by Us | TP |
| E | [time event - days - 7] | seven (7) days | TP |
| E | [legal requirement - registration] | registered mail | FP |

(continued)

| E | [policy action - negated - refund] | no refund | TP |
|---|---|---|---|

Aggregate queries can then be made to the queryable database. For example, the following queries can be made:

# of policies with refunds: 0% (0)
# of policies with policy actions: 40% (2)
# of policies related to mortgages: 20% (1)

The accuracy of the aggregated results in both examples can be ensured whilst privacy preserved when the precision and recall values of the NLP system takes the values as specified in this disclosure.

All of the above are fully within the scope of the present disclosure and are considered to form the basis for alternative embodiments in which one or more combinations of the above described features are applied, without limitation to the specific combination disclosed above.

In light of this, there will be many alternatives which implement the teaching of the present disclosure. It is expected that one skilled in the art will be able to modify and adapt the above disclosure to suit its own circumstances and requirements within the scope of the present disclosure, while retaining some or all technical effects of the same, either disclosed or derivable from the above, in light of his common general knowledge in this art. All such equivalents, modifications or adaptations fall within the scope of the present disclosure. The scope of the invention is defined by the independent claims.

## Claims

1. A computer-implemented method of generating a queryable database having differential privacy, comprising:

   receiving a corpus of free text documents containing confidential data, the free text documents related to the same domain;
   assigning, by a trained Natural Language Processing (NLP) system, one or more abstract named entities to each free text document in the corpus; and
   storing the abstract named entities of each free text document assigned by the NLP system in the queryable database configured to provide aggregated information regarding the named entities;
   wherein the NLP system is configured such that the abstract named entities are recognised and disambiguated with a precision between 0.75 and less than 1 and a recall between 0.75 and less than 1, and wherein the ratio of precision and recall is between 0.7 and 1.3;
   wherein the queryable database is free from the addition of artificial noise by an artificial noise generation algorithm and the differential privacy of the queryable database arises from the precision, recall and ratio of precision and recall of the NLP system.

2. The method of claim 1, wherein the precision is between 0.75 and 0.95 and the recall is between 0.75 and 0.95. preferably wherein the precision is between 0.85 and 0.95 and the recall is between 0.85 and 0.95.

3. The method of claim 1 or 2, wherein the ratio of precision and recall is between 0.8 and 1.2, preferably wherein the ratio of precision and recall is between 0.9 and 1.1.

4. The method of any preceding claim, wherein the number of free text documents received is above 49, preferably above 1000 and more preferably above 39000.

5. The method of any preceding claim, the NLP system comprising one or more machine-learning algorithms, the method comprising the steps of training each of the one or more machine-learning algorithms by:

   selecting one or more sub-sets of free text documents in the domain;
   assigning the one or more abstract named entities to the documents in the one or more sub-sets to form one or more training sets;
   training the one or more machine-learning algorithms using the one or more training sets;

16

selecting a second sub-set of free text documents in the domain;
inputting the second sub-set of the corpus of free text documents to the NLP system;
evaluating whether the NLP system recognises and disambiguates the abstract named entities with a precision between 0.75 and less than 1 and a recall between 0.75 and less than 1, and wherein the ratio of precision and recall is between 0.7 and 1.3; and
if not, re-training the one or more machine-learning algorithms such that the precision, recall and ratio of precision and recall are within the required ranges.

6. The method of claim 5, wherein the training of the one or more machine-learning algorithms is performed iteratively according to claim 5 until the precision, recall and ratio of precision and recall are within the required ranges.

7. The method of claim 5 or 6, wherein, if upon evaluation, it is required that the precision be lowered, then the one or more machine learning algorithms are re-trained by providing training data containing abstract named entities assigned to incorrect strings of text; and/or wherein, if upon evaluation, it is required that the recall be lowered, then the one or more machine learning algorithms are re-trained by providing training data containing text relating to an abstract named entity which has not been assigned that abstract named entity and/or which has been assigned a different abstract named entity.

8. The method of any of claims 5 to 7, wherein the one or more training sets are formed by manually assigning the abstract named entities to the one or more sub-sets, by one or more users; or
wherein the one or more training sets are formed by assigning the abstract named entities to the one or more sub-sets by a second NLP system having a precision above 0.85 and a recall above 0.85, and preferably a precision above 0.95 and recall above 0.95.

9. The method of any of claims 5 to 8, wherein the precision, recall and ratio of precision and recall is evaluated by manually assigning the abstract named entities to the second sub-set of documents by one or more users, and comparing the user assignment of abstract named entities to the second sub-set with the output of the NLP system; or
wherein the precision, recall and ratio of precision and recall is evaluated by assigning the abstract named entities to the second sub-set of documents by a second NLP system having a precision above 0.85 and a recall above 0.85, an preferably a precision above 0.95 and recall above 0.95, and comparing the output of the second NLP system with the output of the NLP system.

10. The method of any preceding claim, wherein the NLP system comprises one or more rule-based algorithms.

11. The method of any preceding claim, wherein the free text documents are medical records, and the abstract named entities comprise patient information and medical terminology.

12. The method of any preceding claim, wherein the named abstract entity and an associated disambiguation term are stored in the database.

13. The method of claim 12, wherein:

the free text documents are medical records and the NLP system is trained to assign one or more of the following disambiguation terms to the abstract named entities: patient information,
medical history, family medical history, medication history, treatment history, symptoms, test results, evolutions and notes; or
the free text documents are insurance records and the NLP system is trained to assign one or more of the following disambiguation terms to the abstract named entities: loss or damage coverage, derivated risk, risk, legal related content, legal figure, policy action, time event, legal requirement.

14. A computer program product for generating a queryable database having differential privacy, comprising instructions which, when executed by a computer, cause the computer to:

receive a corpus of free text documents containing confidential data, the free text documents related to the same domain;
assign, by the trained Natural Language Processing (NLP) system, one or more abstract named entities to each free text document in the corpus; and
store the abstract named entities of each free text document assigned by the NLP system in the queryable database configured to provide aggregated data regarding the named entities;

wherein the NLP system is configured such that the abstract named entities are recognised and disambiguated with a precision between 0.75 and less than 1 and a recall between 0.75 and less than 1, and wherein the ratio of precision and recall is between 0.7 and 1.3;

and wherein the queryable database is free from the addition of artificial noise by an artificial noise generation algorithm and the differential privacy of the queryable database arises from the precision, recall and ratio of precision and recall of the NLP system.

15. A data processing apparatus for generating a queryable database having differential privacy, comprising a trained Natural Language Processing (NLP) system and configured to:

receive a corpus of free text documents containing confidential data, the free text documents related to the same domain;

assign, by the trained Natural Language Processing (NLP) system, one or more abstract named entities to each free text document in the corpus; and

store the abstract named entities of each free text document assigned by the NLP system in the queryable database configured to provide aggregated data regarding the named entities;

wherein the NLP system is configured such that the abstract named entities are recognised and disambiguated with a precision between 0.75 and less than 1 and a recall between 0.75 and less than 1, and wherein the ratio of precision and recall is between 0.7 and 1.3;

wherein the queryable database is free from the addition of artificial noise by an artificial noise generation algorithm and the differential privacy of the queryable database arises from the precision, recall and ratio of precision and recall of the NLP system.

**Patentansprüche**

1. Computerimplementiertes Verfahren zur Erzeugung einer abfragbaren Datenbank, welche eine differentielle Privatsphäre aufweist, umfassend:

das Empfangen eines Korpus von Freitextdokumenten enthaltend vertrauliche Daten, wobei sich die Freitextdokumente auf die gleiche Domäne beziehen;

das Zuordnen, mittels eines trainierten Systems zur Verarbeitung natürlicher Sprache (NLP), einer oder mehrerer abstrakten benannten Entitäten jedem Freitextdokument im Korpus; und

das Speichern der abstrakten benannten Entitäten jedes Freitextdokuments, welche vom NLP-System zugeordnet wurden, in der abfragbaren Datenbank, welche dazu eingerichtet ist, aggregierte Informationen bezüglich der benannten Entitäten bereitzustellen;

wobei das NLP-System so eingerichtet ist, dass die abstrakten benannten Entitäten mit einer Präzision zwischen 0,75 und weniger als 1 und einem Abruf zwischen 0,75 und weniger als 1 erkannt und disambiguiert werden, und wobei das Präzisions- und Abrufverhältnis zwischen 0,7 und 1,3 liegt;

wobei die abfragbare Datenbank frei vom Hinzufügen von künstlichem Geräusch mittels eines Algorithmus zur Erzeugung von künstlichem Geräusch ist und sich die differentielle Privatsphäre der abfragbaren Datenbank aus der Präzision, dem Abruf und dem Präzisions- und Abrufverhältnis des NLP-Systems ergibt.

2. Verfahren nach Anspruch 1, wobei die Präzision zwischen 0,75 und 0,95 liegt und der Abruf zwischen 0,75 und 0,95 liegt, wobei vorzugsweise die Präzision zwischen 0,85 und 0,95 liegt und der Abruf zwischen 0,85 und 0,95 liegt.

3. Verfahren nach Anspruch 1 oder 2, wobei das Präzisions- und Abrufverhältnis zwischen 0,8 und 1,2 liegt, wobei vorzugsweise das Präzisions- und Abrufverhältnis zwischen 0,9 und 1,1 liegt.

4. Verfahren nach einem vorhergehenden Anspruch, wobei die Anzahl von empfangenen Freitextdokumenten über 49, vorzugsweise über 1000 und weiter vorzugsweise über 39000 liegt.

5. Verfahren nach einem vorhergehenden Anspruch, wobei das NLP-System einen oder mehrere maschinelle Lernalgorithmen umfasst, wobei das Verfahren die Schritte des Trainierens jedes des einen oder der mehreren maschinellen Lernalgorithmen mittels der Folgenden umfasst:

des Auswählens eines oder mehrerer Teilsätze von Freitextdokumenten in der Domäne;

des Zuordnens der einen oder mehreren abstrakten benannten Entitäten den Dokumenten im einen oder in den mehreren Teilsätzen, um einen oder mehrere Trainingssätze zu bilden;

das Trainierens des einen oder der mehreren maschinellen Lernalgorithmen unter Verwendung des einen oder der mehreren Trainingssätze;

des Auswählen eines zweiten Teilsatzes von Freitextdokumenten in der Domäne;

des Eingebens des zweiten Teilsatzes des Korpus von Freitextdokumenten in das NLP-System;

des Auswertens ob das NLP-System die abstrakten benannten Entitäten mit einer Präzision zwischen 0,75 und weniger als 1 und einem Abruf zwischen 0,75 und weniger als 1 erkennt und disambiguiert, und wobei das Präzisions- und Abrufverhältnis zwischen 0,7 und 1,3 liegt; und

wenn nicht, des erneuten Trainierens des einen oder der mehreren maschinellen Lernalgorithmen, sodass die Präzision, der Abruf und das Präzisions- und Abrufverhältnis innerhalb der benötigten Bereiche liegen.

6. Verfahren nach Anspruch 5, wobei das Trainieren des einen oder der mehreren maschinellen Lernalgorithmen iterativ gemäß Anspruch 5 durchgeführt wird, bis die Präzision, der Abruf und das Präzisions- und Abrufverhältnis innerhalb der benötigten Bereiche liegen.

7. Verfahren nach Anspruch 5 oder 6, wobei, wenn, nach der Auswertung, es benötigt wird, dass die Präzision verringert wird, dann der eine oder die mehreren maschinelle Lernalgorithmen erneut trainiert werden, indem Trainingdaten enthaltend abstrakte benannte Entitäten bereitgestellt werden, welche unrichtigen Textfolgen zugeordnet wurden; und/oder

wobei, wenn, nach der Auswertung, es benötigt wird, dass der Abruf verringert wird, dann der eine oder die mehreren maschinellen Lernalgorithmen erneut trainiert werden, indem Trainingdaten enthaltend Text bereitgestellt werden, welcher sich auf eine abstrakte benannte Entität bezieht, welcher nicht dieser abstrakten benannten Entität zugeordnet wurde und/oder welcher einer unterschiedlichen abstrakten benannten Entität zugeordnet wurde.

8. Verfahren nach einem der Ansprüche 5 bis 7, wobei der eine oder die mehreren Trainingssätze gebildet werden, indem die abstrakten benannten Entitäten einem oder mehreren Teilsätze, vonseiten eines oder mehrerer Benutzer, manuell zugeordnet werden; oder

wobei der eine oder die mehreren Trainingssätze gebildet werden, indem die abstrakten benannten Entitäten dem einen oder den mehreren Teilsätze mittels eines zweiten NLP-Systems, welches eine Präzision über 0,85 und einen Abruf über 0,85, und vorzugsweise eine Präzision über 0,95 und einen Abruf über 0,95 aufweist, zugeordnet werden.

9. Verfahren nach einem der Ansprüche 5 bis 8, wobei die Präzision, der Abruf und das Präzisions- und Abrufverhältnis ausgewertet werden, indem die abstrakten benannten Entitäten dem zweiten Teilsatz von Dokumenten vonseiten eines oder mehrerer Benutzer manuell zugeordnet werden, und indem die Benutzerzuordnung von abstrakten benannten Entitäten zum zweiten Teilsatz mit der Ausgabe des NLP-Systems verglichen wird; oder

wobei die Präzision, der Abruf und das Präzisions- und Abrufverhältnis ausgewertet werden, indem die abstrakten benannten Entitäten dem zweiten Teilsatz von Dokumenten mittels eines zweiten NLP-Systems, welches eine Präzision über 0,85 und einen Abruf über 0,85, und vorzugsweise einen Präzision über 0,95 und einen Abruf über 0,95 aufweist, zugeordnet werden, und indem die Ausgabe des zweiten NLP-Systems mit der Ausgabe des NLP-Systems verglichen wird.

10. Verfahren nach einem vorhergehenden Anspruch, wobei das NLP-System einen oder mehrere regelbasierte Algorithmen umfasst.

11. Verfahren nach einem vorhergehenden Anspruch, wobei die Freitextdokumente medizinische Akten sind, und die abstrakten benannten Entitäten Patienteninformation und medizinische Terminologie umfassen.

12. Verfahren nach einem vorhergehenden Anspruch, wobei die benannte abstrakte Entität und ein assoziierter Disambiguierungsbegriff in der Datenbank gespeichert werden.

13. Verfahren nach Anspruch 12, wobei:

die Freitextdokumente medizinische Akten sind und das NLP-System dazu trainiert ist, einen oder mehrere der folgenden Disambiguierungsbegriffe den abstrakten benannten Entitäten zuzuordnen: Patienteninformation, Krankengeschichte, familiäre Krankengeschichte, Medikamentenanamnese, Behandlungsgeschichte, Symptome, Testergebnisse, Verläufe und Anmerkungen; oder

die Freitextdokumente Versicherungsakten sind und das NLP-System dazu trainiert ist, einen oder mehrere der folgenden Disambiguierungsbegriffe den abstrakten benannten Entitäten zuzuordnen: Verlust- oder Schadendeckung, abgeleitetes Risiko, Risiko, rechtlich relevanter Inhalt, Rechtsform, Handlung der Versicherungspolice, Zeitereignis, gesetzliche Anforderung.

14. Computerprogrammprodukt zur Erzeugung einer abfragbaren Datenbank, welche eine differentielle Privatsphäre aufweist, umfassend Befehle, welche, wenn sie von einem Computer ausgeführt werden, dem Computer dazu bringen:

einen Korpus von Freitextdokumenten enthaltend vertrauliche Daten zu empfangen, wobei sich die Freitextdokumente auf die gleiche Domäne beziehen;
mittels des trainierten Systems zur Verarbeitung natürlicher Sprache (NLP), eine oder mehrere abstrakte benannte Entitäten jedem Freitextdokument im Korpus zuzuordnen; und
die abstrakten benannten Entitäten jedes Freitextdokuments, welche mittels des NLP-Systems zugeordnet wurden, in der abfragbaren Datenbank zu speichern, welche dazu eingerichtet ist, aggregierte Daten bezüglich der benannten Entitäten bereitzustellen;
wobei das NLP-System so eingerichtet ist, dass die abstrakten benannten Entitäten mit einer Präzision zwischen 0,75 und weniger als 1 und einem Abruf zwischen 0,75 und weniger als 1 erkannt und disambiguiert werden, und wobei das Präzisions- und Abrufverhältnis zwischen 0,7 und 1,3 liegt;
und wobei die abfragbare Datenbank frei vom Hinzufügen von künstlichem Geräusch mittels eines Algorithmus zur Erzeugung von künstlichem Geräusch ist und sich die differentielle Privatsphäre der abfragbaren Datenbank aus der Präzision, dem Abruf und dem Präzisions- und Abrufverhältnis des NLP-Systems ergibt.

15. Datenverarbeitungsgerät zur Erzeugung einer abfragbaren Datenbank, welche eine differentielle Privatsphäre aufweist, welches ein trainiertes System zur Verarbeitung natürlicher Sprache (NLP) umfasst und dazu eingerichtet ist:

einen Korpus von Freitextdokumenten enthaltend vertrauliche Daten zu empfangen, wobei sich die Freitextdokumente auf die gleiche Domäne beziehen;
mittels des trainierten Systems zur Verarbeitung natürlicher Sprache (NLP), eine oder mehrere abstrakte benannte Entitäten jedem Freitextdokument im Korpus zuzuordnen; und
die abstrakten benannten Entitäten jedes Freitextdokuments, welche mittels des NLP-Systems zugeordnet wurden, in der abfragbaren Datenbank zu speichern, welche dazu eingerichtet ist, aggregierte Daten bezüglich der benannten Entitäten bereitzustellen;
wobei das NLP-System so eingerichtet ist, dass die abstrakten benannten Entitäten mit einer Präzision zwischen 0,75 und weniger als 1 und einem Abruf zwischen 0,75 und weniger als 1 erkannt und disambiguiert werden, und wobei das Präzisions- und Abrufverhältnis zwischen 0,7 und 1,3 liegt;
wobei die abfragbare Datenbank frei vom Hinzufügen von künstlichem Geräusch mittels eines Algorithmus zur Erzeugung von künstlichem Geräusch ist und sich die differentielle Privatsphäre der abfragbaren Datenbank aus der Präzision, dem Abruf und dem Präzisions- und Abrufverhältnis des NLP-Systems ergibt.

## Revendications

1. Procédé implémenté par ordinateur de génération d'une base de données interrogeable ayant une confidentialité différentielle, comprenant :

réception d'un corpus de documents en texte libre contenant des données confidentielles, les documents en texte libre étant liés au même domaine ;
assignation, par un système de traitement du langage naturel (NLP) entraîné, d'une ou plusieurs entités nommées abstraites à chaque document en texte libre dans le corpus ; et
stockage des entités nommées abstraites de chaque document en texte libre assignées par le système de NLP dans la base de données interrogeable configurée pour fournir des informations agrégées concernant les entités nommées ;
dans lequel le système de NLP est configuré de telle sorte que les entités nommées abstraites sont reconnues et désambiguïsées avec une précision entre 0,75 et moins de 1 et un rappel entre 0,75 et moins de 1, et dans lequel le rapport de précision et rappel est entre 0,7 et 1,3 ;
dans lequel la base de données interrogeable est libre d'ajout de bruit artificiel par un algorithme de génération de bruit artificiel et la confidentialité différentielle de la base de données interrogeable résulte de la précision, le rappel et le rapport de précision et rappel du système de NLP.

**2.** Procédé selon la revendication 1, dans lequel la précision est entre 0,75 et 0,95 et le rappel est entre 0,75 et 0,95, préférablement dans lequel la précision est entre 0,85 et 0,95 et le rappel est entre 0,85 et 0,95.

**3.** Procédé selon la revendication 1 ou 2, dans lequel le rapport de précision et rappel est entre 0,8 et 1,2, préférablement dans lequel le rapport de précision et rappel est entre 0,9 et 1,1.

**4.** Procédé selon l'une quelconque des revendications précédentes, dans lequel le nombre de documents en texte libre reçus est au-dessus de 49, préférablement au-dessus de 1 000 et plus préférablement au-dessus de 39 000.

**5.** Procédé selon l'une quelconque des revendications précédentes, le système de NLP comprenant un ou plusieurs algorithmes d'apprentissage automatique, le procédé comprenant les étapes d'entraînement de chacun desdits un ou plusieurs algorithmes d'apprentissage automatique par :

   sélectionnant un ou plusieurs sous-ensembles de documents en texte libre dans le domaine ;
   assignant lesdites une ou plusieurs entités nommées abstraites aux documents dans lesdits un ou plusieurs sous-ensembles pour former un ou plusieurs ensembles d'entraînement ;
   entraînant lesdits un ou plusieurs algorithmes d'apprentissage automatique en utilisant lesdits un ou plusieurs ensembles d'entraînement ;
   sélectionnant le deuxième sous-ensemble du corpus de documents en texte libre dans le domaine ;
   saisissant le deuxième sous-ensemble du corpus de documents en texte libre dans le système de NLP ;
   évaluant si le système de NLP reconnaît et désambiguïse les entités nommées abstraites avec une précision entre 0,75 et moins de 1 et un rappel entre 0,75 et moins de 1, et dans lequel le rapport de précision et rappel est entre 0,7 et 1,3 ; et
   sinon, en réentraînant lesdits un ou plusieurs algorithmes d'apprentissage automatique de telle sorte que la précision, le rappel et le rapport de précision et rappel soient à l'intérieur des plages requises.

**6.** Procédé selon la revendication 5, dans lequel l'entraînement desdits un ou plusieurs algorithmes d'apprentissage automatique est réalisé itérativement selon la revendication 5 jusqu'à ce que la précision, le rappel et le rapport de précision et rappel soient à l'intérieur des plages requises.

**7.** Procédé selon la revendication 5 ou 6, dans lequel, si après l'évaluation, il est requis que la précision soit abaissée, alors lesdits un ou plusieurs algorithmes d'apprentissage automatique sont réentraînés en fournissant des données d'entraînement contenant des entités nommées abstraites assignées à des chaînes de texte incorrectes ; et/ou dans lequel, si après évaluation, il est requis que le rappel soit abaissé, alors lesdits un ou plusieurs algorithmes d'apprentissage automatique sont réentraînés en fournissant des données d'entraînement contenant du texte concernant une entité nommée abstraite qui n'a pas été assignée à cette entité nommée abstraite et/ou qui a été assignée à une entité nommée abstraite différente.

**8.** Procédé selon l'une quelconque des revendications 5 à 7, dans lequel lesdits un ou plusieurs ensembles d'entraînement sont formés en assignant manuellement les entités nommées abstraites auxdits un ou plusieurs sous-ensembles, par un ou plusieurs utilisateurs ; ou dans lequel lesdits un ou plusieurs ensembles d'entraînement sont formés en assignant les entités nommées abstraites auxdits un ou plusieurs sous-ensembles par un deuxième système de NLP ayant une précision au-dessus de 0,85 et un rappel au-dessus de 0,85, et préférablement une précision au-dessus de 0,95 et un rappel au-dessus de 0,95.

**9.** Procédé selon l'une quelconque des revendications 5 à 8, dans lequel la précision, le rappel et le rapport de précision et rappel sont évalués en assignant manuellement les entités nommées abstraites au deuxième sous-ensemble de documents par un ou plusieurs utilisateurs, et en comparant l'assignation par l'utilisateur d'entités nommées abstraites au deuxième sous-ensemble avec la sortie du système de NLP ; ou dans lequel la précision, le rappel et le rapport de précision et rappel sont évalués en assignant les entités nommées abstraites au deuxième sous-ensemble de documents par un deuxième système de NLP ayant une précision au-dessus de 0,85 et un rappel au-dessus de 0,85, et préférablement une précision au-dessus de 0,95 et un rappel au-dessus de 0,95, et en comparant la sortie du deuxième système de NLP avec la sortie du système de NLP.

**10.** Procédé selon l'une quelconque des revendications précédentes, dans lequel le système de NLP comprend un ou plusieurs algorithmes basés sur des règles.

**11.** Procédé selon l'une quelconque des revendications précédentes, dans lequel les documents en texte libre sont des dossiers médicaux, et les entités nommées abstraites comprennent des informations sur patient et terminologie médicale.

**12.** Procédé selon l'une quelconque des revendications précédentes, dans lequel l'entité nommée abstraite et un terme de désambiguïsation associé sont stockés dans la base de données.

**13.** Procédé selon la revendication 12, dans lequel :

les documents en texte libre sont des dossiers médicaux et le système de NLP est entraîné à assigner un ou plusieurs des termes de désambiguïsation suivants aux entités nommées abstraites : informations sur patient, antécédents médicaux, antécédents médicaux familiaux, antécédents de médication, antécédents de traitement, symptômes, résultats de tests, évolutions et notes ; ou
les documents en texte libre sont des dossiers d'assurance et le système de NLP est entraîné à assigner un ou plusieurs des termes de désambiguïsation suivants aux entités nommées abstraites : couverture de perte ou dommage, risque dérivé, risque, contenu juridique connexe, figure juridique, action politique, événement de temps, obligation juridique.

**14.** Produit de programme informatique pour générer une base de données interrogeable ayant une confidentialité différentielle, comprenant des instructions qui, lorsqu'elles sont exécutées par un ordinateur, amènent l'ordinateur à :

recevoir un corpus de documents en texte libre contenant des données confidentielles, les documents en texte libre étant liés au même domaine ;
assigner, par le système de traitement du langage naturel (NLP) entraîné, une ou plusieurs entités nommées abstraites à chaque document en texte libre dans le corpus ; et
stocker les entités nommées abstraites de chaque document en texte libre assignées par le système de NLP dans la base de données interrogeable configurée pour fournir des données agrégées concernant les entités nommées ;
dans lequel le système de NLP est configuré de telle sorte que les entités nommées abstraites sont reconnues et désambiguïsées avec une précision entre 0,75 et moins de 1 et un rappel entre 0,75 et moins de 1, et dans lequel le rapport de précision et rappel est entre 0,7 et 1,3 ;
et dans lequel la base de données interrogeable est libre d'ajout de bruit artificiel par un algorithme de génération de bruit artificiel et la confidentialité différentielle de la base de données interrogeable résulte de la précision, le rappel et le rapport de précision et rappel du système de NLP.

**15.** Appareil de traitement de données pour générer une base de données interrogeable ayant une confidentialité différentielle, comprenant un système de traitement du langage naturel (NLP) entraîné et configurée pour :

recevoir un corpus de documents en texte libre contenant des données confidentielles, les documents en texte libre étant liés au même domaine ;
assigner, par le système de traitement du langage naturel (NLP) entraîné, une ou plusieurs entités nommées abstraites à chaque document en texte libre dans le corpus ; et
stocker les entités nommées abstraites de chaque document en texte libre assignées par le système de NLP dans la base de données interrogeable configurée pour fournir des données agrégées concernant les entités nommées ;
dans lequel le système de NLP est configuré de telle sorte que les entités nommées abstraites sont reconnues et désambiguïsées avec une précision entre 0,75 et moins de 1 et un rappel entre 0,75 et moins de 1, et dans lequel le rapport de précision et rappel est entre 0,7 et 1,3 ;
dans lequel la base de données interrogeable est libre d'ajout de bruit artificiel par un algorithme de génération de bruit artificiel et la confidentialité différentielle de la base de données interrogeable résulte de la précision, le rappel et le rapport de précision et rappel du système de NLP.

FIG. 1

Receive a corpus of free text documents containing confidential data — 202

Assign by NLP system abstract named entities to each free text document — 204

Store abstract named entities of each free text document in queryable database — 206

200

FIG. 2

NLP system 104

Pre-processing
302

Recognition
304

Disambiguation
306

FIG. 3

24

```
┌─────────────────────────────────────────────────────┐
│      Selecting sub-set of free text documents       │ 402
└─────────────────────────────────────────────────────┘
                          │
                          ▼
┌─────────────────────────────────────────────────────┐
│  Assign abstract named entities to the documents to  │ 404
│            form training sets                        │
└─────────────────────────────────────────────────────┘
                          │
                          ▼
┌─────────────────────────────────────────────────────┐
│  Train machine-learning algorithms using the training│ 406
│                     sets                             │
└─────────────────────────────────────────────────────┘
                          │
                          ▼
┌─────────────────────────────────────────────────────┐
│      Selecting second sub-set of free text documents │ 408
└─────────────────────────────────────────────────────┘
                          │
                          ▼
┌─────────────────────────────────────────────────────┐
│        Input the second sub-set to the NLP system    │ 410
└─────────────────────────────────────────────────────┘
                          │
                          ▼
┌─────────────────────────────────────────────────────┐
│                Evaluate NLP system                   │
└─────────────────────────────────────────────────────┘
                                                        412
```

400

414

Does NLP system meet requirements?

N → Re-train   416

Y

End   418

FIG. 4

Document 1

This 23-year-old white female presents with complaint of [symptom - allergy] allergies[1]. She used to have [personal background - allergy] allergies[1] when she lived in Seattle but she thinks they are worse here. In the past, she has tried [personal background – treatment] loratadine[1], and [personal background – treatment] cetirizine[1]. Both worked for short time but then seemed to lose effectiveness. She has used [personal background – treatment] fexofenadine[1] also. She used that last summer and she began using it again two weeks ago. It does not appear to be working very well. She has used over-the-counter sprays[4] but no prescription nasal sprays. She does have [symptom - cardiopaty] asthma[2] but does not require daily medication for this and does not think it is flaring up. MEDICATIONS: , Her only medication currently is norgestimate[1] and the [personal background – treatment] fexofenadine[1].

## FIG. 5A

Document 2

He has [symptom – gestroesophageal reflux] gastroesophageal reflux disease[1]. PAST SURGICAL HISTORY:, Includes [symptom – reconstructive surgery] reconstructive surgery[2] on his right hand 13 years ago. ,SOCIAL HISTORY:, He is currently single. He has about ten drinks a year. He had smoked[3] significantly up until several months ago. He now smokes less than three cigarettes a day. FAMILY HISTORY:, Heart disease[3] in both grandfathers, grandmother with stroke[3], and a grandmother with diabetes[3]. Denies obesity and hypertension in other family members. CURRENT MEDICATIONS:, None. ALLERGIES:, He is [symptom – allergy – penicillin] allergic to Penicillin[1].

## FIG. 5B

| Legend | |
|---|---|
| [] | Disambiguation term |
| xxx | Abstract named identity |
| 1 | Example of true positive |
| 2 | Example of false positive |
| 3 | Example of false negative |
| 4 | Example of true negative |

EP 4 081 924 B1

Document 3

HISTORY OF PRESENT ILLNESS: , I have seen ABC today. He is a very pleasant gentleman who is 42 years old, 344 pounds. He is 5'9". He has a [test – BMI - 51] BMI of 51. He has been overweight[1] for ten years since the age of 33, at his highest he was 358 pounds, at his lowest 260. He is pursuing [procedure – surgery] surgical[2] attempts of weight loss to feel good, get healthy, and begin to [symptom – asthma] exercise[2] again. He did six months of [personal background – drinking alcohol] not drinking alcohol[2] and not taking in many calories. He has been on multiple commercial weight loss programs[4] including Slim Fast for one month one year ago and Atkin's Diet for one month two years ago.

**FIG. 5C**

Document 4

2-D M-MODE: , ,1. [symptom – left atrial enlargment] Left atrial enlargement[1] with left atrial diameter of 4.7 cm[1].,2. Normal size right and left ventricle[1].,3. Normal LV systolic function[1] with left [symptom – ventricular ejection fraction - 51%] ventricular ejection fraction of 51%[1].,4. [symptom – Normal LV diastolic function] Normal LV diastolic function[1].,5. Normal morphology of aortic valve[1], mitral valve[1], tricuspid valve[1], and pulmonary valve[1].

**FIG. 5D**

EP 4 081 924 B1

Document 5

1. The [symptom – left ventrictular size normal][symptom – left ventricular cavity size normal][symptom – left ventricular wall thickness normal] left ventricular cavity size and wall thickness appear normal[1]. The wall motion and left ventricular systolic function appears hyperdynamic with estimated ejection fraction of 70% to 75%[1]. There is [symptom – pulmonary obstruction] near-cavity obliteration[1] seen. There also appears to be [symptom – increased ventricular outflow] increased left ventricular outflow[1] tract gradient at the mid cavity level consistent with hyperdynamic left ventricular systolic function[1]. There is abnormal left ventricular relaxation pattern[1] seen.

FIG. 5E

Document 1

[risk – radioactive contamination] <u>Radioactive Contamination</u>[1]

This Policy does [loss or damage coverage – negated – nucleal reaction nuclear radiation] <u>not cover any loss or damage arising directly or indirectly from nuclear reaction nuclear radiation</u>[1] or <u>radioactive contamination</u>[1] however such nuclear reaction nuclear radiation or radioactive contamination may have been caused * Nevertheless if fire is an insured peril and a [derivated risk – fire caused from nuclear reaction] <u>fire arises directly or indirectly from nuclear reaction nuclear radiation</u>[1] or <u>radioactive contamination</u>[1] any loss or damage arising directly from that fire shall (<u>subject to the provisions of this Policy</u>[4])

<center>FIG. 6A</center>

Document 2

[risk – infectious disease] <u>Infectious Disease</u>[1]

That notwithstanding anything contained to the contrary in the Policy the cover hereunder does not extend to include <u>injury</u>[1], <u>sickness</u>[1] or <u>death</u>[1] of an insured person or any liability attaching to the Insured for loss of or damage to third party property, injury, sickness or death of a third party as a result of claims arising directly or indirectly from, caused by, <u>happening through</u>[4], in consequence of or in any way attributable to Infectious Disease, [infectious disease – avian flu] <u>Avian Flu</u>[1] or from any disease that has been declared as an epidemic by the [risk -health related risk] <u>World Health Organization</u>[2].

<center>FIG. 6B</center>

EP 4 081 924 B1

Document 3

[legal related content – arbitration] Arbitration[1]

Any [legal related content – dispute] dispute[3] arising out of this Policy shall be referred to the decision of an [legal figure – arbitrator] Arbitrator[3] to be appointed by both parties or if they cannot agree upon a single arbitrator[3] to the decision of two arbitrators[3] one to be appointed in writing by each party (within one month[4] after being required in writing to do so by either party). The two arbitrators shall then mutually appoint an [legal figure – arbitrator] umpire[2] who shall have been appointed in writing by the arbitrators[3]. The [legal figure – arbitrator] umpire[2] shall sit with the arbitrators[3] and preside at their meetings[4]. The making of an award by the arbitrator[3], arbitrators[3] or [legal figure – arbitrator] umpire[2] shall be a condition precedent to any right[4] of action against Us

Document 4

[risk – mortgage] Mortgage[3]

It is hereby agreed that in the event of any loss or damage[4] that is insured hereunder, We will [risk execution – mortgage payment] pay the Mortgagees[3] or said Assignees[3] as stated on the Schedule to the extent of their interest[4] and that this insurance insofar as concerns the interest therein of the Mortgagees or said Assignees[3] only shall not be invalidated by any act or neglect of the [legal figure – mortgator] Mortgagor[3] or Owner of the Buildings.

FIG. 6D

Document 5

[policy action – unilateral cancellation] <u>Cancellation by Us</u>

We have the right to cancel this Policy by giving You [time event – days – 7] <u>seven (7)</u> <u>days</u> by [legal requirement – registration] <u>registered mail</u> notice in writing to Your last known address. If a <u>claim</u> has been made, or an <u>incident</u> that may give rise to a claim has <u>been reported</u>, then [policy action – negated – refund] <u>no refund</u> of premium will be due. If no <u>claim</u> has been made then we will <u>refund</u> you a pro rata premium in <u>proportion to the amount</u> of time that Your Policy has been in force.

<p style="text-align:center"><strong>FIG. 6E</strong></p>

EP 4 081 924 B1

**REFERENCES CITED IN THE DESCRIPTION**

**Patent documents cited in the description**

- US 2014278409 A1